# FASCICULE DE BREVET EUROPEEN

(11) **EP 0 879 498 B1**
(45) Date de publication et mention de la délivrance du brevet: **19.04.2000**
(21) Numéro de dépôt: 97900658.2
(22) Date de dépôt: 16.01.1997
(51) Int. Cl.: H02K 33/16

(54) **ACTIONNEUR ELECTROMAGNETIQUE LINEAIRE A DEUX ROTORS VIBRANT EN OPPOSITION DE PHASE**
ELEKTROMAGNETISCHER LINEAR STELLANTRIEB MIT ZWEI GEGENPHASENSCHWINGENDEN LÄUFERN
LINEAR ELECTROMAGNETIC ACTUATOR WITH TWO ROTORS VIBRATING IN ANTIPHASE

(30) Priorité: 07.02.1996 FR 9601515
(43) Date de publication de la demande: 25.11.1998
(73) Titulaire: MOVING MAGNET TECHNOLOGIES S.A., 25000 Besançon (FR)
(72) Inventeur: OUDET, Claude, F-25000 Besançon (FR); GANDEL, Pierre, F-25600 Montfocon (FR)
(74) Mandataire: Breese, Pierre
(86) Numéro de dépôt international: FR9700078
(87) Numéro de publication internationale: WO9729534

(56) Documents cités:
- DE-A- 2 603 681
- DE-A- 3 025 708
- FR-E- 45 516

## Description

La présente invention concerne un actionneur électromagnétique linéaire comportant un stator excité par au moins une bobine électrique, deux pièces mobiles en opposition de phase et au moins un aimant permanent.

On connaît dans l'état de la technique des actionneurs mettant en oeuvre des parties mobiles en opposition de phase. A titre d'exemple, on peut citer le brevet PCT/FR93/00429 de la demanderesse et le brevet allemand DE2603681.

Le but est de réduire le niveau de vibrations en proposant une structure où la somme des quantités de mouvement des masses mobiles est nulle.

L'objet de la présente invention est de proposer un actionneur amélioré par rapport à l'état de la technique, et en particulier sur le plan de la réduction de l'encombrement transversal et de l'intégration mécanique. Elle vise en particulier à réaliser un actionneur à faible niveau de vibrations parasites compact, d'un prix de fabrication faible et d'une grande robustesse.

A cet effet, l'invention concerne un actionneur.

Avantageusement, les deux pièces ferromagnétiques mobiles sont de forme demi-cylindrique.

De préférence, les deux pièces ferromagnétiques présentent des masses identiques.

Selon un mode de réalisation préféré, le stator comporte deux pôles statoriques cylindriques supportés par une enveloppe tubulaire. Par cylindrique, on entendra toute forme engendrée par le déplacement d'une génératrice le long d'un chemin de forme quelconque, notamment circulaire, rectangulaire ou carré. Dans le cas particulier d'un chemin circulaire, la forme sera annulaire.

Avantageusement, les deux pôles statoriques cylindriques sont disposés d'une façon à ce que les deux pièces mobiles définissent avec les pôles cylindriques opposés des entrefers semi-cylindriques de section fonction de leur position. Le recouvrement de la partie mobile sur le stator supérieur varie en fonction de la position de la pièce moobile.

Selon un mode de réalisation particulier, la longueur L des pièces mobiles est sensiblement égale à la distance D séparant les deux pôles cylindriques plus l'épaisseur 1 d'un pôle cylindrique.

L'invention sera mieux comprise à la lecture de la description qui suit, faisant référence aux dessins annexés où :
- la figure 1 représente une vue en coupe longitudinale d'un actionneur selon l'invention ;
- la figure 2 représente une vue en coupe transversale d'un actionneur selon l'invention ;
- les figures 3 et 4 représentent des vues éclatées de l'actionneur, dans deux positions opposées ;
- la figure 5 représente une vue en coupe longitudinale d'une première variante de l'actionneur selon l'invention ;
- la figure 6 représente une vue en coupe transversale d'une première variante de l'actionneur selon l'invention ;
- la figure 7 représente une vue en coupe longitudinale d'une deuxième variante de l'actionneur selon l'invention ;
- la figure 8 représente une vue en coupe transversale d'une deuxième variante de l'actionneur selon l'invention.

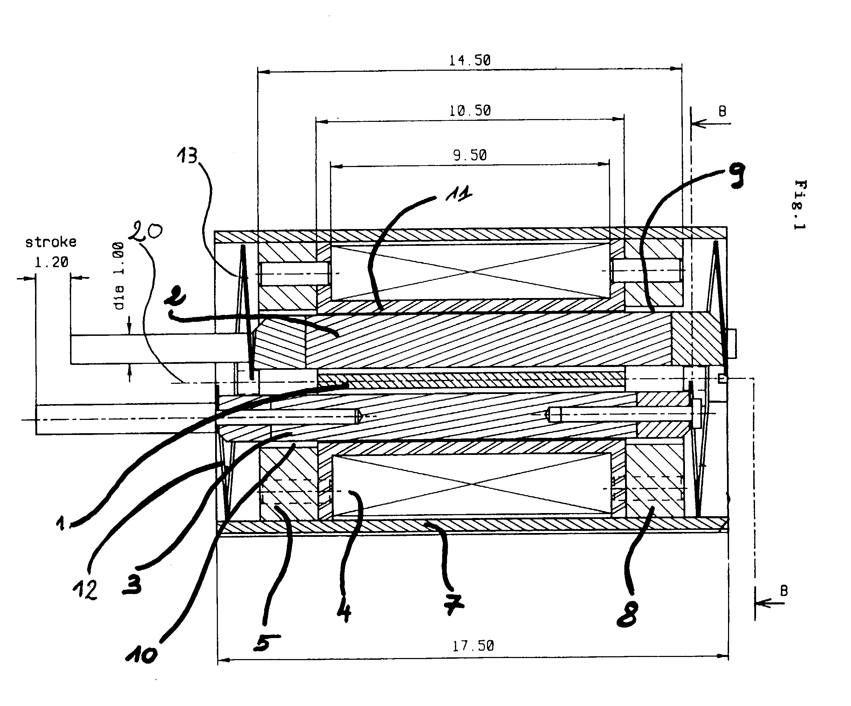

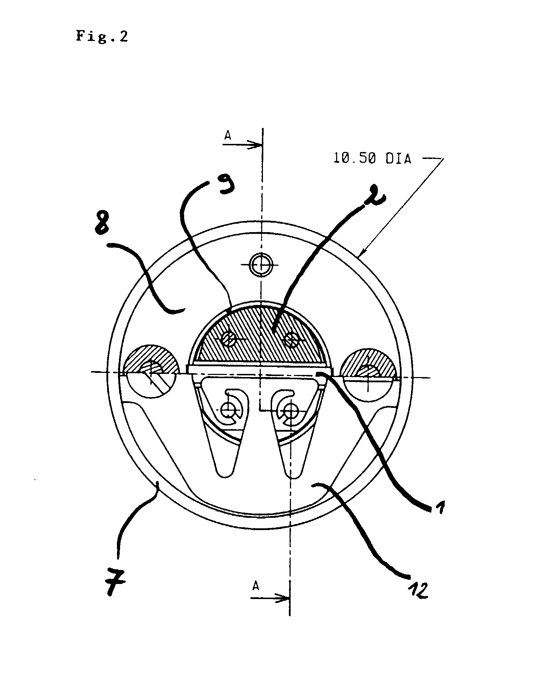

Les figures 1 et 2 représentent des vues en coupe respectivement longitudinale et transversale d'un actionneur selon l'invention. L'actionneur comporte un aimant mince (1) placé dans un plan médian longitudinal (20). L'aimant est du type "terre rare" par exemple du Samarium-cobalt ou Neodyme, et est aimanté transversalement, dans le sens de l'épaisseur, soit perpendiculairement au plan médian (20). L'aimant (1) est fixe par rapport au stator, et est disposé entre deux pièces mobiles (2, 3) constituées par des demi-cylindres en un matériau ferromagnétique. Ces deux pièces mobiles (2, 3) sont symétriques par rapport au plan médian (20). Le stator est constitué par deux pôles statoriques (8, 5) de forme cylindrique entre lesquelles est disposée une bobine cylindrique (4). La bobine cylindrique (4) est bobinée sur un corps de bobine (11) qui supporte par ailleurs l'aimant fixe (1).

Les deux pôles statoriques (5, 8) sont reliés magnétiquement par une culasse extérieure (7) tubulaire. Lorsque la partie mobile (3) est en position basse, elle définit avec le pôle statorique inférieur (5) un entrefer semi-cylindrique (10) de grande section. Dans ce cas, la deuxième partie mobile (2) est en position haute, et définit avec le pôle statorique supérieur (8) un entrefer semi-cylindrique (9) de section sensiblement identique à celle de l'entrefer (10) opposé. Les sections des entrefers (3, 9) sont identiques et varient continûment en fonction de la position des pièces mobiles. Les sections sont maximales en fin de course des pièces mobiles (2, 3).

A titre d'exemple, les pôles statoriques cylindriques (8, 5) présentent une épaisseur 1 de 2 millimètres et sont écartés de 10,5 millimètres. La longueur de la bobine est de 9,5 millimètres. La longueur des pièces mobiles (2, 3) est de 12,5 millimètres, soit sensiblement la valeur de la distance entre les deux pôles statoriques augmentée de l'épaisseur d'un pôle statorique. La longueur de l'aimant (1) est sensiblement égale à la longueur d la bobine (4) soit 10,5 millimètres.

Des lames élastiques (12, 13) disposées à chaque extrémité de l'actionneur assurent le positionnement des pièces mobiles (2, 3) et leur guidage sans frottement.

La bobine électrique (4) alimentée par un courant alterné, par exemple sinusoïdal ou carré, provoque un déplacement alternatif des pièces mobiles (2, 3) qui vibrent en opposition de phase. En fonction de la polarité des ampères-tours appliqués à la bobine (4), les pièces mobiles (2, 3) viendront se positionner en position haute ou en position basse. Quelle que soit la position des pièces mobiles, la force est sensiblement proportionnelle au courant.

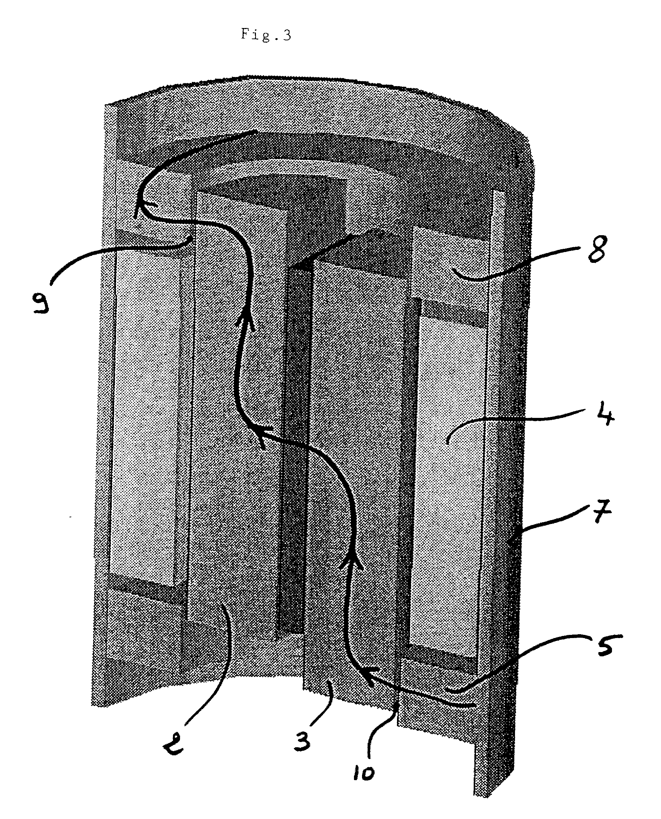

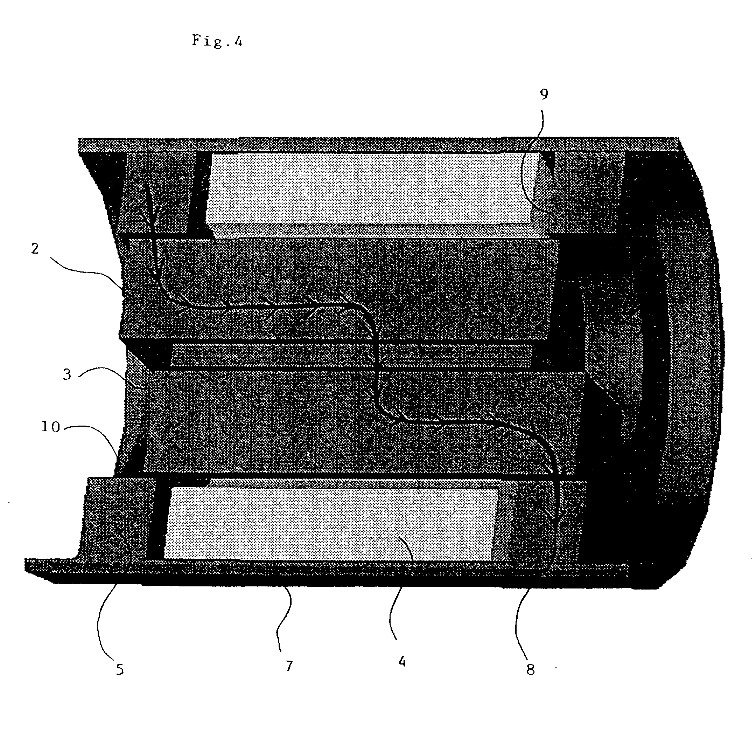

Les figures 3 et 4 représentent des vues éclatées de l'actionneur dans deux positions opposées: Dans la position illustrée par la figure 3, la pièce mobile (2) est en position haute et la pièce mobile (3) est en position basse.

La ligne de champ représentée sur la figure 3 se ferme successivement à travers l'entrefer (9) définit par le pôle statorique supérieur (8) et l'extrémité supérieure de la pièce mobile (2) en position haute, le pôle statorique supérieur (8), la culasse extérieure tubulaire (7), le pôle statorique inférieur (5), l'entrefer (10) définit entre le pôle statorique inférieur (5) et l'extrémité inférieure de la deuxième pièce mobile (3) en position basse et finalement à travers l'aimant (1).

Dans la phase opposée illustrée par la figure 4, la fermeture des lignes de champ s'effectue selon un trajet antisymétrique.

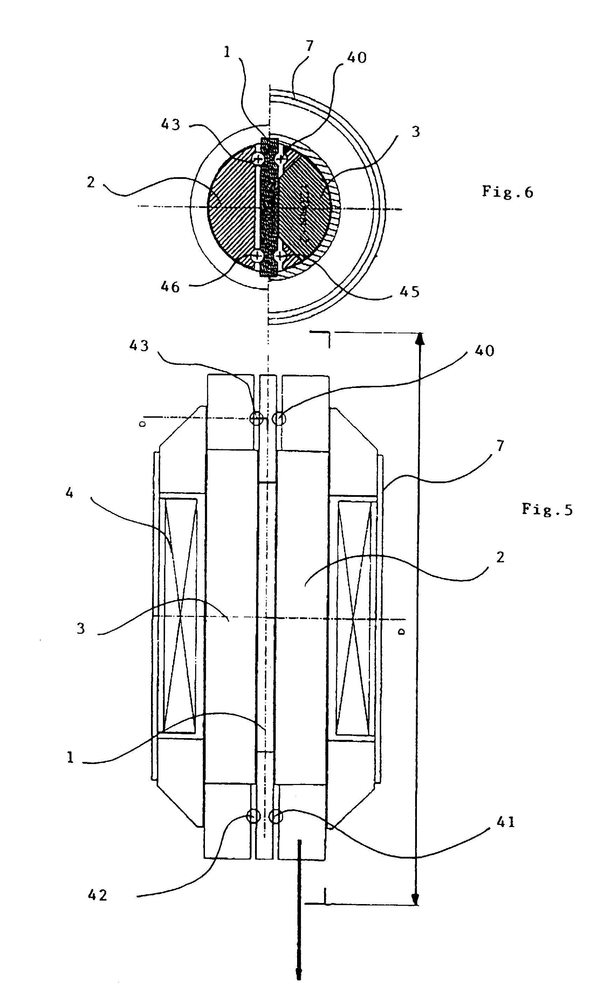

Les figures 5 et 6 représentent une première variante de réalisation dans laquelle les lames-ressorts sont remplacées par des billes. Le guidage des pièces mobiles (2, 3) est réalisé par des billes (40 à 46) ou des aiguilles cylindriques logées dans des cavités de forme complémentaires prévues dans le cadre supportant l'aimant fixe (1).

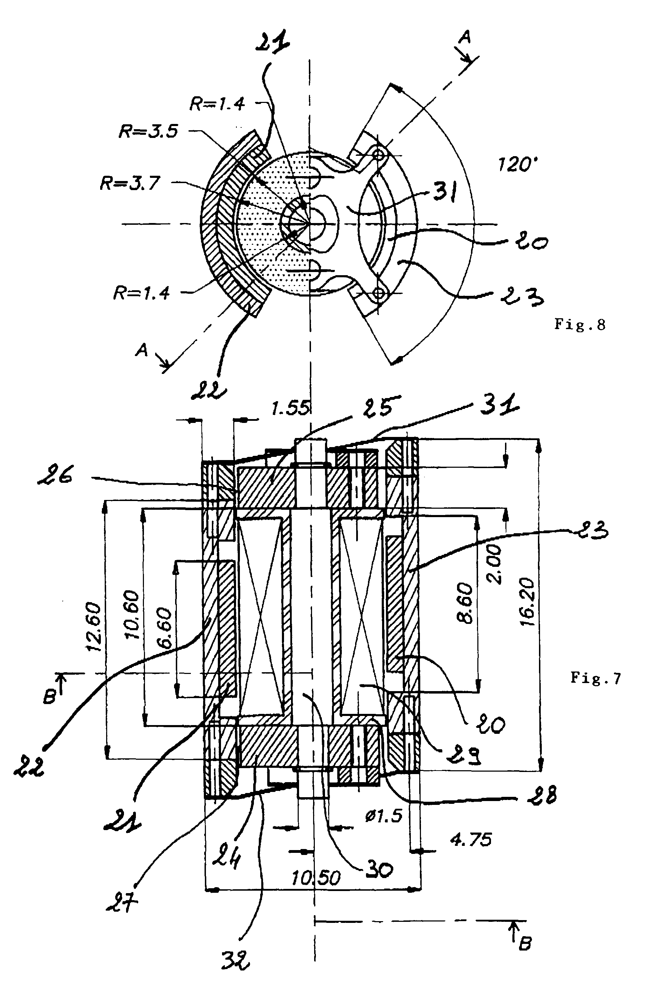

Les figures 7 et 8 représentent une deuxième variante de réalisation. Chaque partie mobile est constituée par une tuile ferromagnétique (22, 23) sur laquelle est collée un aimant respectivement (21, 20) en forme de tuile mince. Les deux aimants (20, 21) en forme de tuile sont aimantées dans le sens de l'épaisseur, selon des orientations identiques, et génèrent chacun un flux qui traverse la bobine cylindrique (29) bobinée sur un corps en matière plastique (28). Pour une polarité de courant donnée, les forces qui s'exercent sur chacune des parties mobiles sont de sens opposé, et la partie mobile (21, 22) a tendance à augmenter la section de l'entrefer (27) qu'elle forme avec le pôle statorique (24) en se déplaçant vers le bas. Pour la même polarité de courant, la partie mobile formée de la pièce ferromagnétique (23) sur laquelle est fixée l'aimant (20) a tendance à augmenter la section de l'entrefer (26) qu'elle forme avec le pôle statorique (25) en se déplaçant vers le haut. Pour une polarité de courant inverse, le mouvement de chacune des parties mobiles est inversé.

L'intérêt de cette variante est que le noyau ferromagnétique (30) qui conduit le flux de chaque aimant vers les pôles (24, 25) voit des circulations de flux en sens opposé pour chaque partie mobile, ce qui a tendance à faire baisser le niveau de saturation dans ledit noyau (30), donc permet d'utiliser une bobine de diamètre intérieur plus petit fournissant plus d'ampères-tours pour une puissance électrique donnée. Les parties mobiles sont suspendues par des lames de flexion (31, 32).

## Revendications

1. Actionneur électromagnétique linéaire comportant un stator excité par au moins une bobine électrique (4, 29), deux pièces mobiles (2, 3) ou (22, 23) en opposition et au moins un aimant mince permanent (1, ou 20, 21) aimanté dans le sens de l'épaisseur, caractérisé en ce que le stator présente deux pôles statoriques cylindriques (5, 8) ou (24, 25) entre lesquels est logée la bobine cylindrique (4, 29), et en ce que les pièces mobiles (2, 3) ou (22, 23) sont des pièces ferromagnétiques disposées d'une manière propre à définir avec les pôles statoriques cylindriques (5, 8) ou (24, 25) des entrefers de section variable, la somme des sections de deux entrefers formés à une extrémité frontale de l'actionneur étant constante.

2. Actionneur électromagnétique linéaire selon la revendication 1 caractérisé en ce que l'aimant permanent mince (1) est un aimant plan disposé dans le plan de symétrie longitudinal médian, les deux pièces mobiles (2, 3) étant des pièces ferromagnétiques disposées de part et d'autre de l'aimant permanent.

3. Actionneur électromagnétique linéaire selon la revendication 2 caractérisé en ce les deux pièces ferromagnétiques mobiles ont la forme d'un cylindre de section semi-circulaire.

4. Actionneur électromagnétique linéaire selon la revendication 1, 2 ou 3 caractérisé en ce que les deux pièces ferromagnétiques présentent des masses identiques.

5. Actionneur électromagnétique linéaire selon l'une quelconque des revendications précédentes caractérisé en ce que le stator comporte deux pôles statoriques annulaires supportés par une enveloppe tubulaire.

6. Actionneur électromagnétique linéaire selon la revendication 5 caractérisé en ce que les deux pôles statoriques cylindriques sont disposés d'une façon à ce que les deux pièces mobiles (2, 3) définissent avec les pôles cylindriques opposés des entrefers semi-cylindriques dont la surface varie continûment, linéairement en fonction de la position des pièces mobiles (2, 3).

7. Actionneur électromagnétique linéaire selon la revendication 5 ou 6 caractérisé en ce que la longueur L des pièces mobiles (2, 3) est sensiblement égale à la distance D séparant les deux pôles cylindriques plus l'épaisseur 1 d'un pôle cylindrique.

8. Actionneur électromagnétique linéaire selon la revendication 1 caractérisé en ce qu'il comporte deux parties mobiles en opposition formée chacune d'une pièce ferromagnétique en forme de tuile associée à un aimant permanent mince (1) en forme de tuile.

9. Actionneur électromagnétique linéaire selon l'une quelconque des revendications précédentes caractérisé en ce que les parties mobiles sont suspendues par des lames élastiques.

10. Actionneur électromagnétique linéaire selon l'une quelconque des revendications 2 à 7 caractérisé en ce que les parties mobiles sont guidées par des billes ou des aiguilles disposées entre les pièces mobiles (2, 3) et l'aimant plan (1).

## Patentansprüche

1. Linearer Elektromagnet, bestehend aus einem von mindestens einer Magnetspule (4, 29) erregten Ständer, zwei gegenphasigen beweglichen Teilen (2, 3) oder (22, 23) und mindestens einem dünnen, in Richtung der Dicke magnetisierten Dauermagnet (1, oder 20, 21), dadurch gekennzeichnet, daß der Ständer zwei zylindrische, Statorpole (5, 8) oder (24, 25) aufweist, zwischen denen die Zylinderspule (4, 29) aufgenommen wird, und daß die beweglichen Teile (2, 3) oder (22, 23) ferromagnetische Teile sind, die so angeordnet sind, daß sie mit den zylindrischen Statorpolen (5, 8) oder (24, 25) Luftspalten veränderlichen Querschnitts bilden, wobei die Summe der Querschnitte der beiden an einem Stirnende des Elektromagnets gebildeten Luftspalten konstant ist.

2. Linearer Elektromagnet nach Anspruch 1, dadurch gekennzeichnet, daß der dünne Dauermagnet (1) ein ebener Magnet ist, der auf der mittleren Längssymmetrieebene angeordnet ist, wobei die beiden beweglichen Teile (2, 3) auf beiden Seiten des Dauermagnets angeordnete ferromagnetische Teile sind.

3. Linearer Elektromagnet nach Anspruch 2, dadurch gekennzeichnet, daß die beiden beweglichen, ferromagnetischen Teile die Form eines im Querschnitt halbkreisförmigen Zylinders haben.

4. Linearer Elektromagnet nach Anspruch 1, 2 oder 3, dadurch gekennzeichnet, daß die beiden ferromagnetischen Teile identische Massen aufweisen.

5. Linearer Elektromagnet nach einem der vorhergehenden Ansprüche, dadurch gekennzeichnet, daß der Ständer zwei ringförmige Statorpole umfaßt, die von einem rohrförmigen Mantel getragen werden.

6. Linearer Elektromagnet nach Anspruch 5, dadurch gekennzeichnet, daß die beiden zylindrischen Statorpole derart angeordnet sind, daß die beiden beweglichen Teile (2, 3) mit den gegenphasigen zylindrischen Polen halbzylindrische Luftspalten bestimmen, deren Fläche sich ständig verändert, und zwar linear je nach der Position der beweglichen Teile (2, 3).

7. Linearer Elektromagnet nach Anspruch 5 oder 6, dadurch gekennzeichnet, daß die Länge L der beweglichen Teile (2, 3) ungefähr der die beiden zylindrischen Pole trennenden Distanz D plus der Dicke 1 eines zylindrischen Pols entspricht.

8. Linearer Elektromagnet nach Anspruch 1, dadurch gekennzeichnet, daß er zwei gegenphasige bewegliche Teile umfaßt, die jeweils aus einem ziegelförmigen, ferromagnetischen Teil, das mit einem ziegelförmigen, dünnen Dauermagnet (1) verbunden ist, gebildet sind.

9. Linearer Elektromagnet nach einem der vorhergehenden Ansprüche, dadurch gekennzeichnet, daß die beweglichen Teile an elastischen Plättchen aufgehängt sind.

10. Linearer Elektromagnet nach einem der Ansprüche 2 bis 7, dadurch gekennzeichnet, daß die beweglichen Teile durch Kugeln oder Nadeln geführt werden, die zwischen den beweglichen Teilen (2, 3) und dem ebenen Magnet (1) angeordnet sind.

## Claims

1. A linear electromagnetic actuator comprising a stator energized by at least one electric coil (4, 29), two movable components (2, 3) or (22, 23) that move in opposition and at least one thin permanent magnet (1, or 20, 21) magnetized in the direction of its thickness, characterized in that the stator has two cylindrical stator poles (5, 8) or (24, 25) between which the cylindrical coil (4, 29) is housed and in that the movable components (2, 3) or (22, 23) are ferromagnetic components arranged in such a way that, with the cylindrical stator poles (5, 8) or (24, 25), they define gaps of variable section, the sum of the sections of the two gaps formed at one frontal end of the actuator being constant.

2. A linear electromagnetic actuator according to Claim 1 characterized in that the thin permanent magnet (1) is a planar magnet arranged in the median longitudinal plane of symmetry, the two movable components (2, 3) being ferromagnetic components arranged on either side of the permanent magnet.

3. A linear electromagnetic actuator according to Claim 2 characterized in that the two movable ferromagnetic components have the shape of a cylinder of semi-circular cross section.

4. A linear electromagnetic actuator according to Claim 1, 2 or 3 characterized in that the two ferromagnetic components have identical masses.

5. A linear electromagnetic actuator according to any one of the preceding claims characterized in that the stator comprises two annular stator poles supported by a tubular sheath.

6. A linear electromagnetic actuator according to Claim 5 characterized in that the two cylindrical stator poles are arranged in such a way that the two movable components (2, 3) define, with the opposite cylindrical poles, semi-cylindrical gaps, the surface area of which varies continuously and linearly according to the position of the movable components (2, 3).

7. A linear electromagnetic actuator according to Claim 5 or 6 characterized in that the length L of the movable components (2, 3) is approximately equal to the distance D separating the two cylindrical poles plus the thickness 1 of a cylindrical pole.

8. A linear electromagnetic actuator according to Claim 1 characterized in that it comprises two movable parts that move in opposition, each formed from a ferromagnetic component in the shape of a tile, associated with a thin permanent magnet (1) in the shape of a tile.

9. A linear electromagnetic actuator according to any one of the preceding Claims characterized in that the movable parts are suspended by elastic strips.

10. A linear electromagnetic actuator according to any one of Claims 2 to 7 characterized in that the movable parts are guided by beads or needles arranged between the movable components (2, 3) and the planar magnet (1).
